# DEMANDE DE BREVET EUROPEEN

(11) **EP 4 826 871 A1**
(43) Date de publication de la demande: **21.10.2026**
(21) Numéro de dépôt: 25224206.0
(22) Date de dépôt: 17.12.2025
(51) Int. Cl.: H01M 50/211, H01M 50/209, H01M 50/502, H01M 50/503, H01M 50/517, H01M 10/04

(54) **MODULE DE BATTERIE A EMPILEMENT D ACCUMULATEURS A EMBALLAGE SOUPLE COMPRENANT UN CORPS INTEGRANT DES PASTILLES DE CONNEXION ELECTRIQUE EN CONTACT AVEC PRESSION AVEC LES LANGUETTES FORMANT LES BORNES DES ACCUMULATEURS**

(30) Priorité: 14.04.2025 FR 2503979
(71) Demandeur: Commissariat à l'Énergie Atomique et aux Énergies Alternatives, 75015 Paris (FR)
(72) Inventeur: MÉE, Fabrice, 38054 GRENOBLE CEDEX 09 (FR); DE PAOLI, Lionel, 38054 GRENOBLE CEDEX 09 (FR)
(74) Mandataire: Ipsilon

(57) **Abrégé**

Module de batterie à empilement d'accumulateurs à emballage souple comprenant un corps intégrant des pastilles de connexion électrique en contact avec pression avec les languettes formant les bornes des accumulateurs.

L'invention concerne un module de batterie (M) à pluralité d'accumulateurs (A1, A2...AN+1), en particulier de géométrie prismatique, emballage souple empilés les uns sur les autres et comprenant un ou plusieurs blocs (7) de connexion électrique des languettes formant les bornes de sortie ou pôle (4, 5) des accumulateurs, un bloc de connexion électrique comprenant un corps (70, 70') dont un logement (71) permet un empilement de pastilles électriquement conductrices (73), qui sont adaptées pour pincer les languettes et ainsi créer une ou plusieurs connexions électriques entre les accumulateurs.

## Description

### Domaine technique

La présente invention concerne le domaine des accumulateurs électrochimiques, et plus particulièrement à des accumulateurs métal-ion.

Plus particulièrement, l'invention a trait à un module de batterie, à empilement d'accumulateurs à emballage souple.

L'invention vise en premier lieu à proposer une solution simple et fiable de connexion entre elles des languettes formant les bornes de sortie de ces accumulateurs.

Bien que décrite en référence à un accumulateur Lithium-ion, l'invention s'applique à tout accumulateur électrochimique métal-ion, c'est-à-dire également Sodium-ion, Magnésium-ion, Aluminium-ion...ou de manière plus générale à tout accumulateur électrochimique. L'invention s'applique à toute chimie d'accumulateurs métal-ion, comme par exemple NMC/Graphite, NCA/Graphite, NMC/G-Si, LFP/ Graphite, Na-ion avec électrolyte liquide ou électrolyte dit solide.

Un module de batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

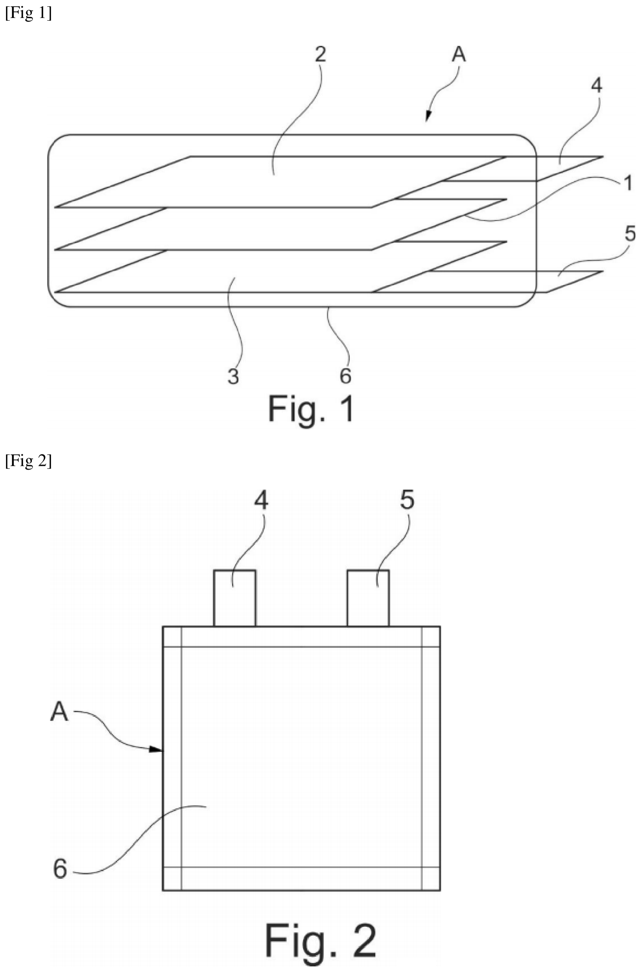

Telle qu'illustrée schématiquement en figures 1 et 2, une batterie ou accumulateur lithium-ion comporte usuellement au moins une cellule électrochimique C constituée d'un constituant d'électrolyte 1, imprégné dans un séparateur permettant d'isoler électriquement les électrodes, entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique et la rendre étanche à l'air extérieur et à l'électrolyte à l'intérieur de la cellule, tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique, avec enroulement autour d'un axe cylindrique telle que divulguée dans la demande de brevet US 2006/0121348,
- une géométrie prismatique, avec enroulement autour d'un axe parallélépipédique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF₆.

L'électrode positive ou cathode est constituée de matériaux d'insertion du cation Lithium qui sont en général composite, comme le phosphate de fer lithié LiFePO₄, l'oxyde de cobalt lithié LiCoO₂, l'oxyde de manganèse lithié, éventuellement substitué, LiMn₂O₄ ou d'oxyde de métaux de transition, comme les matériaux lamellaires par exemple, un matériau à base de LiNixMnyCozO₂ avec x+y+z = 1, tel que LiNi_{0.33}Mn_{0.33}Co_{0.33}O₂, ou un matériau à base de type oxyde de nickel cobalt aluminium LiNixCoyAlzO2 avec x+y+z = 1, tel que LiNi_{0.8}Co_{0.15}Al_{0.05}O₂.

L'électrode négative ou anode est très souvent constituée de carbone, graphite ou de Li₄TiO₅O₁₂ (matériau titanate), éventuellement peut-être à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en œuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant connecté à l'électrode positive est en général en aluminium.

Le collecteur de courant connecté à l'électrode négative est en général en cuivre, en nickel, en cuivre nickelé ou en aluminium.

Plus précisément, l'aluminium est utilisé pour les collecteurs de courant communs à des électrodes positive et négative de titanate Li₄Ti₅O₁₂. Le cuivre est plutôt pour les électrodes négatives de graphite (Cgr), de silicium (Si) ou de composite silicium (Si-C).

Traditionnellement, une batterie ou accumulateur Li-ion utilise un couple de matériaux à l'anode et à la cathode lui permettant de fonctionner à un niveau de tension, typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages rigides (boitiers) sont usuellement fabriqués à partir d'un matériau métallique, typiquement un alliage d'aluminium ou en acier inoxydable ou d'un polymère rigide comme par exemple l'acrylonitrile butadiène styrène (ABS).

Les emballages souples, communément désignés sous la dénomination anglo-saxonne « Pouch », sont usuellement fabriqués à partir d'un matériau composite multicouche constitué d'une feuille d'aluminium recouverte par un ou plusieurs film(s) en polymère laminés par collage. Dans la plupart de ces emballages souples, le polymère recouvrant l'aluminium est choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N °ADR-0N25/AL40/CPP80.

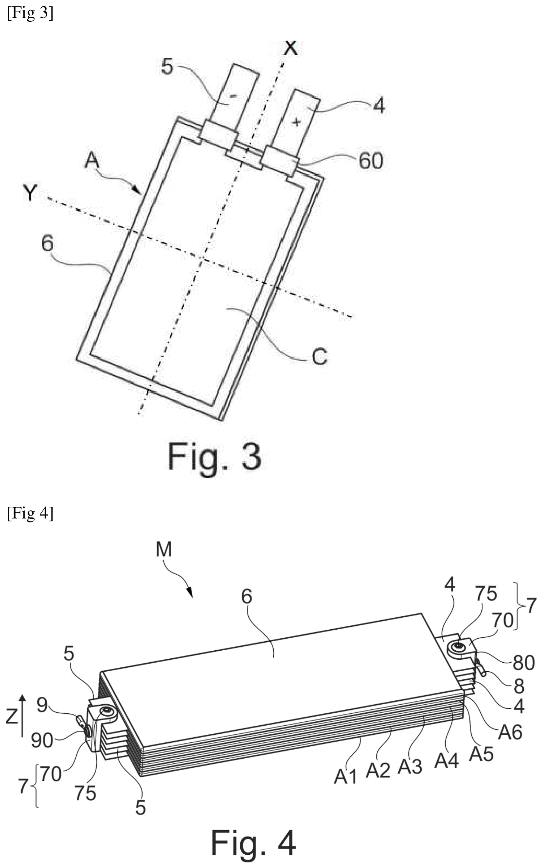

La figure 3 illustre ce type d'emballage souple 6 qui est agencé pour isoler et étanchéifier la cellule électrochimique C tout en étant traversé par une partie de deux lamelles ou languettes 4, 5, communément appelée en anglais « tab », formant les bornes ou pôles et qui s'étendent dans le plan de la cellule électrochimique. La languette 4, constituant la borne positive, se présente sous la forme d'un feuillard métallique d'épaisseur de 0,2 à 0,4 mm, le plus souvent en aluminium. La languette 5, constituant la borne négative, se présente sous la forme d'un feuillard métallique de 0,2 à 0,4 mm, le plus souvent en matériau nickel ou en cuivre ou en cuivre nickelé.

L'avantage principal des emballages souples est leur légèreté. Les accumulateurs Li-ion avec les plus grandes densités d'énergie comportent de ce fait un emballage souple.

Un accumulateur souple, communément appelé en anglais « *Thin Film Battery*», est le plus souvent constitué d'une seule cellule électrochimique.

L'épaisseur totale de l'accumulateur avec son emballage souple est généralement inférieure à 16 mm, qui est fonction des dimensions et de la chimie des matériaux d'électrodes, et ce sans altérer les performances lors du fonctionnement de l'accumulateur.

Un pack batterie est constitué d'un nombre variable d'accumulateurs pouvant atteindre plusieurs milliers qui sont reliés électriquement en série ou en parallèle entre eux et généralement par des barres de connexion, appelées usuellement busbars.

Dans le développement et la fabrication des batteries lithium-ion, chaque profil/nouvelle demande, quels que soient les acteurs du marché, nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Il est connu, notamment pour augmenter les densités d'énergie, de réaliser des pack-batterie par empilement d'accumulateurs à emballage souple, les bornes de sortie des électrodes (languettes ou « tabs ») étant reliées électriquement en série ou en parallèle les unes avec les autres.

Les accumulateurs à emballage souple sont de plus en plus utilisés pour leur densité énergétique et leur compacité.

Une difficulté inhérente à un assemblage par empilement d'accumulateurs souples est de pouvoir assurer des liaisons électriques fiables entre les bornes d'électrodes (languettes ou « tabs ») des différents accumulateurs empilés sans trop augmenter le poids, ni la complexité de l'assemblage en lui-même

Cette difficulté est d'autant plus accrue que les bornes se présentent sous la forme de languettes flexibles, d'un feuillard métallique de très faible épaisseur, typiquement de 0,2 à 0,4mm.

Généralement, les languettes d'électrode sont connectées les unes aux autres à l'aide de fils, de plaques ou de busbars par soudage. Pour cette raison, les languettes d'électrode sont partiellement pliées, et les plaques ou les busbars sont connectées aux parties pliées des autres languettes d'électrode par soudage, ce qui peut être complexe.

De plus, les pièces connectées peuvent se séparer les unes des autres en raison d'impacts externes, ce qui peut entraîner une augmentation du nombre de produits défectueux.

Enfin, cet assemblage par soudage supprime toute possibilité de remplacer un accumulateur défectueux par un autre au sein de l'empilement ou alors au prix d'un coût déraisonnable.

Les solutions d'assemblage les plus couramment utilisées pour interconnecter les accumulateurs à emballage souple impliquent leur intégration au sein d'une structure mécanique plus ou moins complexe, afin de pouvoir récupérer et localiser précisément les languettes de connexions

Plusieurs de ces solutions sont décrites dans la littérature pour réaliser des modules de batterie à empilement d'accumulateurs à emballage souple avec liaisons électriques entre leurs bornes ou pôles.

Le brevet US9023504B1 décrit un module de batterie avec des espaceurs agencés individuellement entre deux accumulateurs adjacents, chaque espaceur comprenant une partie de base en contact surfacique avec l'emballage souple d'un accumulateur, une partie d'aile faisant saillie de la partie de base venant recouvrir au moins partiellement les bords longitudinaux de deux accumulateurs adjacents et enfin une partie de fixation destinée à coupler mécaniquement l'espaceur à un espaceur adjacent. Un tel module présente de nombreux inconvénients. Tout d'abord, tel que dimensionné et agencé, chacun des espaceurs ne protège véritablement un accumulateur que sur une partie de son épaisseur. De plus, compte tenu de la forme de ces espaceurs, il n'y a pas de protection de la partie haute ni de la tranche en partie basse de l'accumulateur. Cela peut être très préjudiciable, sachant qu'en général, l'emballage souple d'un accumulateur est de faible épaisseur, le plus souvent inférieur à 0,2mm. D'autre part, ce brevet US9023504B1 ne prend pas en considération la liaison électrique à prévoir au niveau des languettes (bornes) de l'accumulateur. Ainsi, il n'y a ni mise en position, ni mise en pression des languettes pouvant permettre un mode de connexion électrique favorable des accumulateurs entre eux pour réaliser un assemblage en modules de batterie.

Le brevet EP1834365B1 divulgue un module de batterie à empilement d'accumulateurs à emballage souple, dont les bornes (languettes) sont mises en contact et reliées électriquement entre elles au moyen de boulons qui les traversent. Un tel module présente également de nombreux inconvénients. Il est tout d'abord nécessaire de réaliser au préalable un perçage de chacune des languettes, avec probablement un minimum de précision, ce qui n'est pas aisé compte-tenu de leur épaisseur. En outre, le contact électrique entre languettes est proportionnel à l'effort procuré par le couple de serrage d'un boulon. Ce couple est à doser précisément pour ne pas déformer chacune des plaques de fermeture en face avant et face arrière du module. Enfin, l'effort de mise en compression des languettes par ce serrage de boulons est localisé principalement dans la partie haute du module, i.e. dans la zone des connexions électriques entre languettes. La demande de brevet WO2014/126341 A1 propose une solution analogue.

Le brevet CN105226320B décrit un module de batterie à empilement dans lequel chaque accumulateur est logé dans un support avec ses bornes (languettes) assemblées par soudage à des plots portés par le support. Les inconvénients d'un tel module sont également nombreux. A l'assemblage du module, c'est-à-dire des différents supports d'accumulateurs entre eux, on constate qu'il n'y a pas de mise en compression localisée au niveau des connexions électriques Il y a un montage avec mise en compression des différents étages constitués chacun par un support avec son accumulateur, par l'insertion de longues tiges filetées au travers de fixations de chaque support, chaque fixation étant espacée d'une pièce formant entretoise pour maintenir une épaisseur constante après serrage du module. Cet assemblage nécessite un grand nombre de référence de pièces le plus souvent métalliques qui augmentent considérablement la masse totale du module, et donc nuisent à la densité massique du module.

Le brevet EP2854200B 1 propose une structure avec deux cadres de parte et d'autre d'un seul accumulateur à emballage souple et un boîtier de terminal sous forme de prisme droit comprenant des bornes d'entrée et de sortie externes, auxquelles sont couplées les languettes formant les bornes de sortie de l'accumulateur, insérées dans le boitier.

La demande de brevet KR20120136542A propose des étriers de connexion électrique dont le U vient pincer une languette formant une borne de sortie d'accumulateur à emballage souple, des plaques de connexion vissées assurant la continuité électrique entre les accumulateurs empilés les uns sur les autres.

La demande de brevet EP3985769A1 au nom de la demanderesse propose un module de batterie comprenant une pluralité de supports individuels empilés les uns sur les autres et dans chacun desquels est logé un accumulateur à emballage souple, chaque support portant des cosses qui viennent réaliser individuellement une liaison électrique par contact avec pression avec une borne (languette) d'un des accumulateurs.

Toutes ces solutions imposent une intégration mécanique qui peut être complexe et souvent très impactante sur le volume global, ainsi que la masse du module ou du pack-batterie.

De plus, la plupart de ces solutions ne sont pas modulables, c'est-à-dire ne permettent pas de proposer indifféremment une architecture électrique en série ou en parallèle.

Enfin, une grande majorité de ces solutions exige un préformage des languettes de connexion formant les bornes de sortie des accumulateurs.

Il existe par conséquent un besoin d'améliorer les modules de batterie à empilement d'accumulateurs à emballage souple, notamment afin de pallier les inconvénients précités.

Le but de l'invention est de répondre au moins en partie à ce besoin.

### Exposé de l'invention

Pour ce faire, l'invention concerne, sous l'un de ses aspects, un module de batterie comprenant :
- une pluralité d'accumulateurs allongés selon une direction longitudinale (X) et latérale (Y), en particulier de géométrie prismatique, les accumulateurs étant empilés les uns sur les autres selon une direction d'empilement (Z) orthogonale aux directions (X,Y), chacun des accumulateurs comprenant au moins une cellule électrochimique C formée d'une cathode, d'une anode et d'un électrolyte intercalé entre la cathode et l'anode, et un emballage (6) souple agencé pour contenir avec étanchéité la cellule électrochimique tout en étant traversé par une partie de deux languettes, formant les pôles ou bornes qui s'étendent dans le plan de la cellule électrochimique;
- au moins un bloc de connexion électrique comprenant :
   - un corps de connexion électrique s'étendant selon la direction d'empilement (Z) et comprenant un logement et une pluralité de fentes d'insertion débouchant chacune sur le logement;
   - une pluralité de pastilles de connexion électrique, électriquement conductrices, de préférence en aluminium ou en cuivre, empilées dans le logement du corps,
   - au moins une vis de pression vissée à une extrémité longitudinale du corps de sorte que les pastilles, empilées les unes sur les autres et mises en pression par la vis, pincent au moins une des deux languettes formant une borne de sortie ou pôle d'au moins une partie des accumulateurs, insérée dans une des fentes du corps, afin d'établir une ou des connexions électriques entre lesdits accumulateurs.

De préférence le module comprend deux blocs de connexion électrique, dont l'un permet de pincer les languettes formant les bornes de sortie positives des accumulateurs et l'autre permet de pincer les languettes formant les bornes de sortie négatives des accumulateurs.

Plusieurs modes et variantes de réalisation avantageux peuvent être envisagés pour établir des connexions électriques en série ou en parallèle électrique des accumulateurs au sein du module.

Selon un premier mode, les pastilles de connexion électrique sont empilées les unes sur les autres, les languettes formant une borne de sortie d'une même polarité des accumulateurs étant insérées individuellement entre deux pastilles de connexion électrique adjacentes avec le cas échéant une des languettes insérée entre la vis de pression et une pastille à une extrémité de l'empilement et/ou entre le corps et une pastille à l'autre extrémité de l'empilement, afin de réaliser une mise en parallèle électrique entre les accumulateurs.

Selon ce premier mode, et une première variante, le module comprend deux blocs de connexion électrique, le corps de chacun des deux blocs étant électriquement conducteur, de préférence en aluminium ou en cuivre, et taraudé pour y visser une vis de fixation d'une cosse de sortie d'une polarité positive ou négative du module.

Dans cette configuration de mise en parallèle électrique, les pastilles et la ou les vis de pression peuvent être également en aluminium ou en cuivre. On peut envisager de leur faire subir un traitement de surface de type nickelage ou argenture, afin d'améliorer encore les résistances de contact.

L'aluminium constitue un matériau privilégié pour les corps et pastilles de connexion électrique, ainsi que la ou les vis de pression d'un bloc de connexion électrique, pour les raisons suivantes :
- il présente une faible densité, typiquement une masse volumique de 2,7 g/cm3 plus faible que celle du cuivre ou du nickel, qui est 8,9 g/cm3. Cela permet un gain de masse pour chaque bloc de connexion du module de batterie ;
- il présente une très bonne conductivité électrique : à masse égale au cuivre, l'aluminium présente une conductivité électrique deux fois supérieure.
- il est facilement soudable par un procédé de soudage laser ou usinable (taraudable). On peut ainsi envisager d'utiliser des busbars en aluminium qui peuvent être soudés en direct sur ou des cosses de connexion directement visser dans les blocs de connexions en aluminium du module selon l'invention.

Tout en conservant une configuration en parallèle électrique, une deuxième variante consiste en ce que le module comprend deux blocs de connexion électrique, le corps de chacun des deux blocs étant électriquement isolant, de préférence en polyétheréthercétone (PEEK) ou polyétherimide (PEI), chacun des deux blocs comprenant une vis de pression taraudée pour y visser une vis de fixation d'une cosse de sortie d'une polarité positive ou négative du module. Cette deuxième variante est privilégiée à des fins de sécurité ou de facilité d'intégration : le courant électrique global est être ainsi récupéré la vis de pression taraudée. On peut aussi le récupérer directement sur l'extrémité de l'empilement des pastilles de connexion électrique.

Selon un deuxième mode, les pastilles de connexion électrique sont empilées les unes sur les autres en alternance avec des pastilles d'isolation électrique, électriquement isolantes, les languettes formant une borne de sortie d'une même polarité des accumulateurs étant insérées individuellement entre une pastille de connexion électrique et une pastille d'isolation électrique adjacente avec le cas échéant une des languettes insérée entre la vis de pression et une pastille de connexion ou d'isolation électrique à une extrémité de l'empilement, afin de réaliser une mise en série électrique entre les accumulateurs.

Les pastilles d'isolation électrique peuvent être avantageusement réalisées dans un matériau plastique autolubrifiants afin d'abaisser le coefficient de friction, comme le polyoxyméthylène (POM) ou le polytétrafluoroéthylène (PTFE), ce qui permet de faciliter leurs déplacements au sein d'un logement d'un bloc de connexion électrique.

Selon ce deuxième mode, le module comprend de préférence deux blocs de connexion électrique, le corps de chacun des deux blocs de connexion électrique étant électriquement isolant, de préférence en polyétheréthercétone (PEEK) ou polyétherimide (PEI), un des deux blocs comprenant deux vis de pression taraudées pour y visser une vis de fixation d'une cosse de sortie du module, une étant d'une polarité positive tandis que l'autre est de polarité négative. Le PEEK ou le PEI ont l'avantage d'être une matière plastique parfaitement diélectrique et possédant une bonne résistance mécanique.

Ainsi, selon ce deuxième mode, la mise en série est garantie par l'alternance des pastilles de connexion électrique et celles d'isolation électrique et le courant électrique global est récupéré par les vis de pression en extrémités d'empilement desdites pastilles.

Le choix de l'un et/ou l'autre des modes de connexion électrique pourra être fait à souhait en fonction des contraintes des applications, notamment en fonction des puissances et tensions requises par module de batterie selon l'invention.

Avantageusement, les pastilles de connexion et le cas échéant les pastilles d'isolation électrique sont pleines, afin de supporter la force de pression et, optimiser la section de passage du courant.

Avantageusement encore, les pastilles connexion et le cas échéant les pastilles d'isolation électrique sont sous la forme de cylindres, le logement étant sous la forme d'un cylindre creux. Des pastilles pleines de forme cylindrique permettent de garantir une translation simple, sans à coup et fiable à l'intérieur d'un logement du bloc de connexion électrique.

Plusieurs variantes peuvent être envisagées afin d'améliorer les contacts électriques entre languettes formant les bornes de sortie ou pôle des accumulateur et les pastilles de connexion électrique et ainsi, diminuer les résistances de contact entre elles.

Une première variante consiste en ce qu'au moins une des faces planes principales des pastilles connexion ayant sa surface texturée et/ou ondulée, de sorte à augmenter sa rugosité. Pour cette texturation visant à augmenter la rugosité de la surface de contact d'une pastille, un traitement de type dépolissage ou moletage de celle-ci peut être avantageux.

Une deuxième variante peut consister en ce que la vis de pression soit vissée de sorte que les pastilles créent un embouti des languettes. Autrement dit, en fin de course de vissage, on définit un décalage d'une pastille relativement à une fente d'insertion de sorte que la pastille vient contraindre mécaniquement la languette et crée ainsi un embouti.

Ces variantes permette qu'une pastille viennent déformer le matériau métallique d'une languette, ce qui permet de diminuer les valeurs de résistances de contact électrique.

La pression appliquée sur la ou les vis de pression (couple de serrage) est également déterminante sur ces valeurs.

Selon un mode de réalisation avantageux, le corps du bloc de connexion électrique comprend une pluralité de logements parallèles avec des fentes d'insertion alignées entre elles, chacun logeant des pastilles de connexion électrique. Ainsi, selon ce mode, on multipliant les rangées de pastilles empilées les unes à côté des autres dans un même corps de bloc de connexion électrique. Et par-là une même languette d'un accumulateur est en contact avec plusieurs pastilles de connexion électrique, les unes à côté des autres. Cela permet d'améliorer le maintien mécanique des languettes et d'augmenter les surfaces de contact électrique, et par-là cela autorise une plus grande section de passage de courant.

Avantageusement, le corps du bloc de connexion électrique comprend une fenêtre débouchante depuis l'extérieur sur le logement pour visualiser l'empilement des pastilles. Un opérateur peut ainsi pouvoir contrôler l'empilement et la mise en pression corrects des pastilles, selon l'architecture électrique souhaitée.

Selon une configuration avantageuse, au moins deux languettes formant chacune une borne de sortie ou pôle d'un de deux accumulateurs adjacents peuvent être insérées et pincées dans une même fente. Autrement dit, on peut connecter électriquement au moins deux accumulateurs adjacents par une de leurs languettes de sortie dans une même fente d'un bloc de connexion électrique.

Pour une application Li-ion, chaque accumulateur étant un accumulateur Li-ion dans lequel :
- le matériau d'électrode(s) négative(s) est choisi dans le groupe comportant le graphite, le lithium, l'oxyde de titanate Li₄TiO₅O_{12 ;}
- le matériau d'électrode(s) positive(s) est choisi dans le groupe comportant LiFePO₄, LiCoO₂, LiNi_{0.33}Mn_{0.33}Co_{0.33}O₂.

L'invention a enfin pour objet un procédé de réalisation d'un module de batterie tel que décrit précédemment, comprenant les étapes suivantes :
i/ empilement selon la direction d'empilement (Z) les uns sur les autres de la pluralité d'accumulateurs avec les languettes, formant les pôles ou bornes de sortie d'une polarité positive ou négative des accumulateurs qui sont en regard les unes des autres en étant distantes ;
ii/ empilement des pastilles de connexion électrique au sein du logement d'au moins un bloc de connexion électrique dans une position d'attente laissant dégager l'intérieur de la pluralité de fentes d'insertion;
iii/ insertion d'une des deux languettes formant une borne ou pôle de chaque accumulateur dans une d'insertion ;
iv/ vissage de la vis de pression du bloc de sorte à mettre en pression les pastilles empilées et par-là à pincer la languette afin d'établir une ou des connexions électriques entre lesdits accumulateurs.

Ainsi, l'invention consiste essentiellement à définir un module de batterie comprenant une pluralité d'accumulateurs à emballage souple empilés les uns sur les autres et un ou plusieurs blocs de connexion électrique des languettes formant les bornes de sortie ou pôle des accumulateurs.

Un bloc de connexion électrique comprend un corps dont un logement permet un empilement de pastilles électriquement conductrices, le cas échéant avec alternance de pastilles isolantes électriquement, qui sont adaptées pour pincer les languettes et ainsi créer une ou plusieurs connexions électriques entre les accumulateurs.

Les languettes sont insérées dans des fentes d'insertion entre les pastilles, puis l'empilement de pastilles avec les languettes insérées est mis en compression par l'intermédiaire d'une ou plusieurs vis de pression vissée(s) dans le corps du bloc afin de créer les liaisons électriques.

Au final, l'invention apporte de nombreux avantages parmi lesquels on peut citer:
- un montage / démontage simple et rapide (écoconception) d'un module de batterie ;
- la possibilité d'adapter la solution pour tout type d'architecture électrique d'un module de batterie ;
- une simultanéité des connexions ou déconnexions par un serrage unique au moyen d'une vis de pression :
- la possibilité de connecter ensemble un nombre d'accumulateurs à souhait;
- la possibilité de connecter ensemble des accumulateurs de faible épaisseur, l'espace entre deux fentes d'insertion adjacentes et la hauteur de pastilles de connexion électrique pouvant être de faible épaisseur;
- une facilité d'intégration d'un ou plusieurs modules selon l'invention au sein d'un boitier de batterie, grâce à la compacité des blocs de connexion électrique.
- la suppression d'une étape de process de soudage, par voie électrique ou soudage aux ultrasons, nécessaire dans les solutions selon l'état de l'art ;
- un impact favorable sur la densité d'énergie massique d'un module de batterie : le gain de masse réalisé sur l'ensemble des pièces métalliques de fixation, habituellement utilisées dans les solutions de l'état de l'art, va permettre d'améliorer la densité d'énergie massique (Wh/kg) d'une batterie.

De nombreuses applications de module de batterie avec accumulateurs à emballage souple peuvent être envisagées, notamment de par la difficulté usuelle à connecter électriquement ces accumulateurs entre eux.

Également, toutes les applications qui nécessitent une maintenance simplifiée et une durée de vie de modules de batterie accrue (écoconception) peuvent être envisagées.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion de format prismatique avec son emballage souple selon l'état de l'art.
[Fig 3] la figure 3 est une vue en perspective d'un accumulateur lithium-ion de format prismatique avec son emballage souple selon l'état de l'art.
[Fig 4] la figure 4 est une vue en en perspective d'un module de batterie selon l'invention, avec une pluralité d'accumulateurs à emballage souple empilés les uns sur les autres et deux blocs de connexion électrique reliant chacun les languettes formant les bornes de sortie ou pôles des accumulateurs pour les relier en parallèle électrique.
[Fig 5] la figure 5 est une vue en perspective et en transparence montrant un bloc de connexion électrique comprenant un corps, des pastilles de connexion électrique à empiler dans le corps avant le vissage d'une vis de mise en pression de l'empilement.
[Fig 6] la figure 6 reprend la figure 5 mais avec après le vissage de la vis de pression.
[Fig 7] la figure 7 est une vue en perspective montrant un bloc de connexion électrique dont les pastilles de connexion électrique mises en pression par la vis en pinçant les languettes de polarité positive de la pluralité d'accumulateurs d'un module de batterie selon l'invention.
[Fig 8] la figure 8 est une vue en perspective partielle d'un bloc de connexion selon une variante de l'invention où le corps est isolant électrique et la sortie du courant global du module est réalisée par une cosse de sortie vissées dans la vis de pression du bloc.
[Fig 9] la figure 9 est une vue de détail de côté d'un corps du bloc montrant des bords avec chanfreins des fentes du corps.
[Fig 10] la figure 10 est une vue en perspective et en transparence de la variante avec le corps isolant électrique et la sortie du courant global du module réalisée par une cosse de sortie vissées dans la vis de pression du bloc.
[Fig 11] la figure 11 est une vue en perspective montrant un bloc de connexion électrique selon la variante avec le corps isolant électrique et dont les pastilles de connexion électrique sont mises en pression par la vis en pinçant les languettes de polarité positive de la pluralité d'accumulateurs d'un module de batterie selon l'invention.
[Fig 12] la figure 12 montre en perspective partielle et en vue de coupe longitudinale un module de batterie selon l'invention avec des accumulateurs de faible hauteur empilés les uns sur les autres et un bloc de connexion électrique conforme à l'invention qui relient les languettes de polarité négative des accumulateurs.
[Fig 13] la figure 13 est une vue en perspective partielle d'une variante de bloc de connexion pour une architecture en série électrique des accumulateurs, selon laquelle le corps est isolant électrique et loge un empilement de pastilles de connexion électrique en alternance avec des pastilles d'isolation électrique.
[Fig 14] la figure 14 est une vue en perspective et en transparence d'un module de batterie selon l'invention, avec une pluralité d'accumulateurs à emballage souple empilés les uns sur les autres et deux blocs de connexion électrique selon la variante de la figure 13, reliant chacun les languettes formant les bornes de sortie ou pôles des accumulateurs pour les relier en série électrique.
[Fig 15] est une vue en perspective d'une pastille de connexion électrique selon une variante de réalisation.
[Fig 16] la figure 16 est une vue en coupe longitudinale partielle réalisée au niveau d'une pastille et d'une languette d'accumulateur au sein d'un module de batterie selon l'invention, la pastille mise sous pression par la vis créant un embouti de la languette.
[Fig 17] la figure 17 est une vue en perspective et transparence d'une autre variante de bloc de connexion, selon laquelle le corps est isolant électrique et loge trois empilements côte-à-côte de pastilles de connexion électrique en alternance avec des pastilles d'isolation électrique.
[Fig 18] la figure 18 est une vue en perspective et en transparence d'un module de batterie selon l'invention, avec une pluralité d'accumulateurs à emballage souple empilés les uns sur les autres et un bloc de connexion électrique selon la variante de la figure 17, reliant les languettes formant les bornes de sortie ou pôles des accumulateurs de polarité positive pour les relier en série électrique.
[Fig 19] la figure 19 est une vue en perspective d'une variante de réalisation d'un corps d'un bloc de connexion électrique.
[Fig 20] la figure 20 est une vue en perspective et en transparence d'un bloc de connexion électrique avec un corps selon la variante de la figure 19 et un empilement alterné de pastilles de connexion électrique et de pastilles d'isolation électrique.
[Fig 21] la figure 21 est une vue en perspective montrant la possibilité d'insérer et pincer deux languettes d'accumulateurs distincts, empilés l'un sur l'autre, dans une même fente de corps d'un bloc de connexion électrique conforme à l'invention.

### Description détaillée

Les figures 1 à 3 sont relatives à des exemples différents d'accumulateur Li-ion, d'emballages souples selon l'état de l'art. Ces figures 1 à 3 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 21.

Dans l'ensemble de la présente demande, les termes « inférieur », « supérieur », « bas », « haut », « dessous » et « dessus » sont à comprendre par référence par rapport à un module de batterie selon l'invention avec des accumulateurs Li-ion positionnés à l'horizontale.

Dans les exemples illustrés ci-après, les accumulateurs A1 à A6 illustrés sont de format prismatique, à emballage souple 6, usuellement appelés « pouch ».

Les accumulateurs A1 à A6 peuvent être reliés électriquement en série et/ou en parallèle dans un module selon l'invention. Le montage en série et/ou en parallèle électrique est fonction de la connexion des languettes des accumulateurs au sein d'un bloc de connexion électrique.

On a représenté en figure 4, un exemple d'un module de batterie M selon l'invention comprenant plusieurs accumulateurs A1, A2, ..A6, allongés selon une direction longitudinale (X) et latérale (Y) et empilés les uns sur les autres selon une direction d'empilement (Z) orthogonale aux directions X et Y.

Selon l'invention, le module M comprend au moins un bloc de connexion électrique 7 comprenant un corps 70 de connexion électrique s'étendant selon la direction d'empilement Z, destiné à pincer les languettes formant les bornes de sortie 4 ou 5 des accumulateurs afin de les relier électriquement entre elles.

Plus précisément dans l'exemple de la figure 4, toutes les languettes formant les bornes de sortie 4 positives sont reliées entre elles par un bloc 7, toutes celles formant les bornes de sortie 5 négatives sont reliées entre elles par un autre bloc 7, et les corps 70 des deux blocs 7 sont électriquement conducteurs, afin de réaliser une mise en parallèle électrique de l'ensemble des accumulateurs A1-A6 du module.

Une cosse de sortie 8, 9 de polarité respectivement positive et négative du module M est fixée au moyen d'une vis 80, 90 au corps 70 d'un des deux blocs 7.

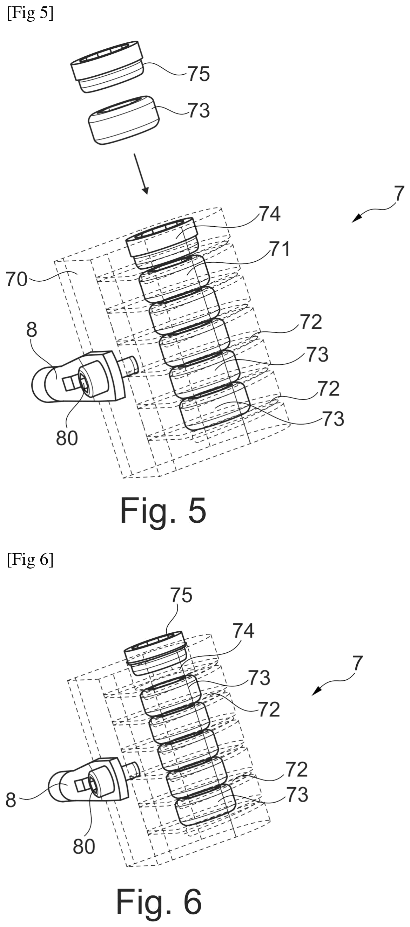

Comme illustré sur la figures 5 et 6, le corps 70 du module comprend tout d'abord un logement 71 et une pluralité de fentes d'insertion 72 débouchant chacune sur le logement.

Une pluralité de pastilles de connexion électrique 73, électriquement conductrices, de préférence en aluminium ou en cuivre, sont empilées les unes sur les autres dans le logement 71 du corps 70.

L'extrémité longitudinale 74 du corps 70 est taraudée pour recevoir par vissage une vis de pression 75.

Selon l'invention, une fois vissée dans le corps 70, la vis de pression 75 met en pression l'empilement des pastilles 73.

Une des deux languettes 4 ou 5 formant une borne de sortie ou pôle d'au moins une partie des accumulateurs, insérée au préalable dans une des fentes 72 du corps est ainsi serrée par pincement, ce qui permet d'établir une ou des connexions électriques entre lesdits accumulateurs.

Dans l'exemple illustré des figures 4 à 7, les languettes 4 ou 5 formant une borne de sortie d'une même polarité (positive ou négative) des accumulateurs A1-A6 sont insérées individuellement entre deux pastilles de connexion électrique 73 adjacentes au sein de l'empilement.

A une des extrémités de l'empilement, une des languettes 4 ou 5 est insérée entre la vis de pression 75 et une pastille 73 à une extrémité de l'empilement tandis qu'à l'autre extrémité une languette 4 ou 5 est insérée entre le corps 70 et une pastille 73, afin de réaliser la mise en parallèle électrique entre les accumulateurs.

Le corps 70 de chacun des deux blocs est électriquement conducteur, de préférence en aluminium ou en cuivre, et taraudé pour y visser une vis de fixation 80 ou 90 d'une cosse de sortie 8 ou 9 d'une polarité respectivement positive ou négative du module.

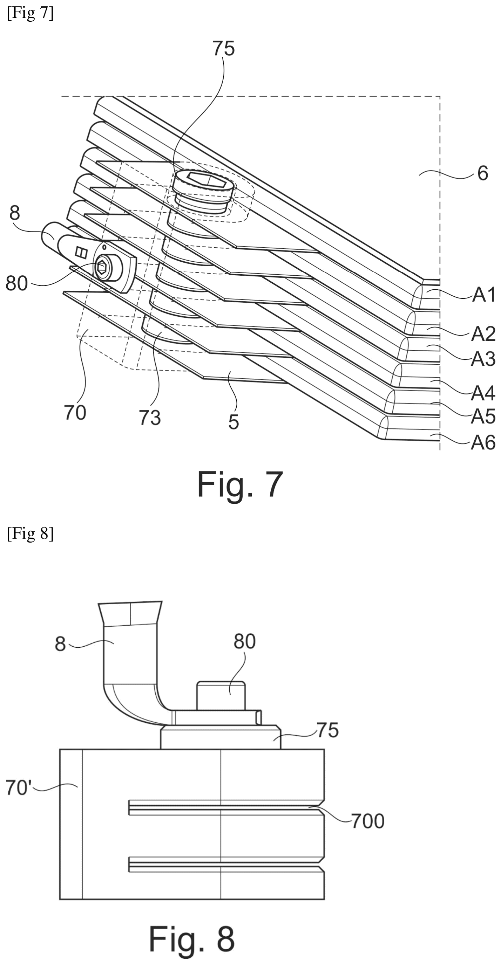

La figure 8 illustre la possibilité d'avoir une sortie de courant par une extrémité de l'empilement : plus précisément, une cosse de sortie 8 est directement vissée dans une vis de pression 75.

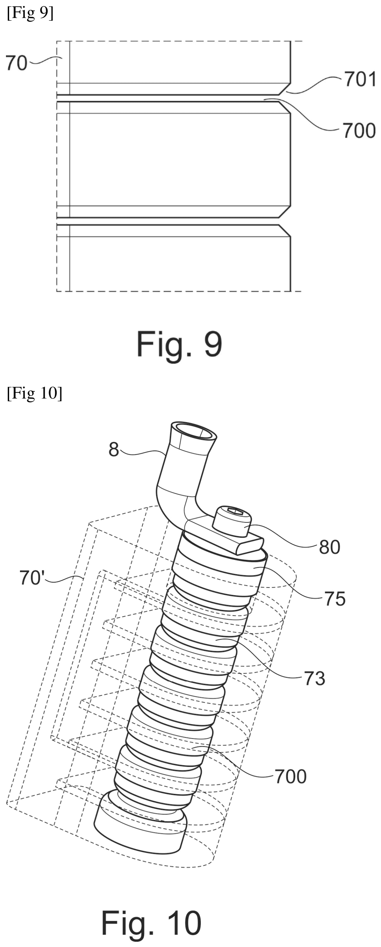

La figure 9 montre des chanfreins 701 ajoutés sur l'extérieur des fentes 72 du corps 70. Ces chanfreins 701 facilitent la localisation et l'insertion des languettes 4 ou 5 à connecter avec un bloc de connexion électrique 7.

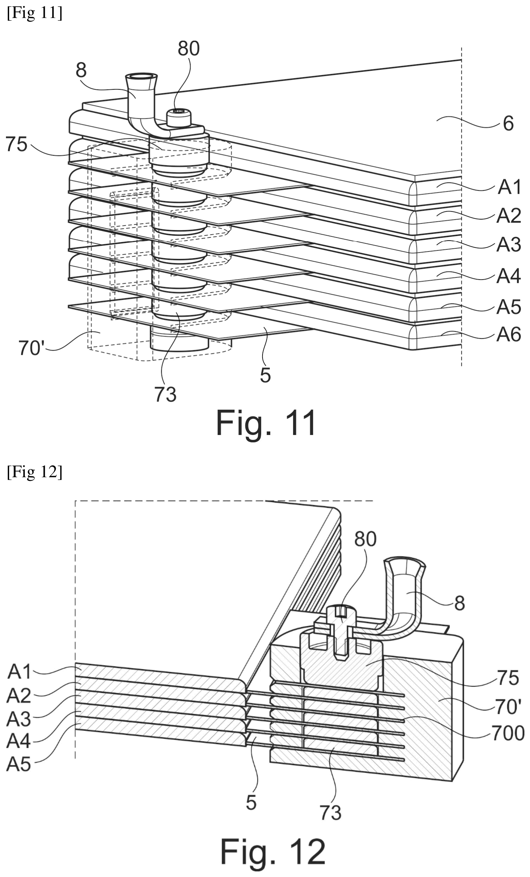

Les figures 10 et 11 illustrent une variante de réalisation à des fins de sécurité ou de facilité d'intégration : le corps 70' d'un bloc de connexion électrique 7 est diélectrique (électriquement isolant) et la sortie du courant global est réalisé par une cosse de sortie 8 vissée au moyen d'une vis 80 dans la vis de pression 75. On peut aussi prévoir une sortie du courant directement sur l'extrémité de l'empilement des pastilles électriquement conductrices 73. Le corps 70' peut avantageusement être en polyétheréthercétone (PEEK) ou en polyétherimide (PEI).

La figure 12 montre qu'un bloc de connexion électrique 7 selon l'invention peut être mis en œuvre pour connecter électriquement des accumulateurs A1-A6 de faible ou très faible hauteur, la hauteur des pastilles 73 pouvant être adaptée à souhait. Cela est particulièrement avantageux pour des accumulateurs de dernières générations qui sont fabriquées de plus en plus fins.

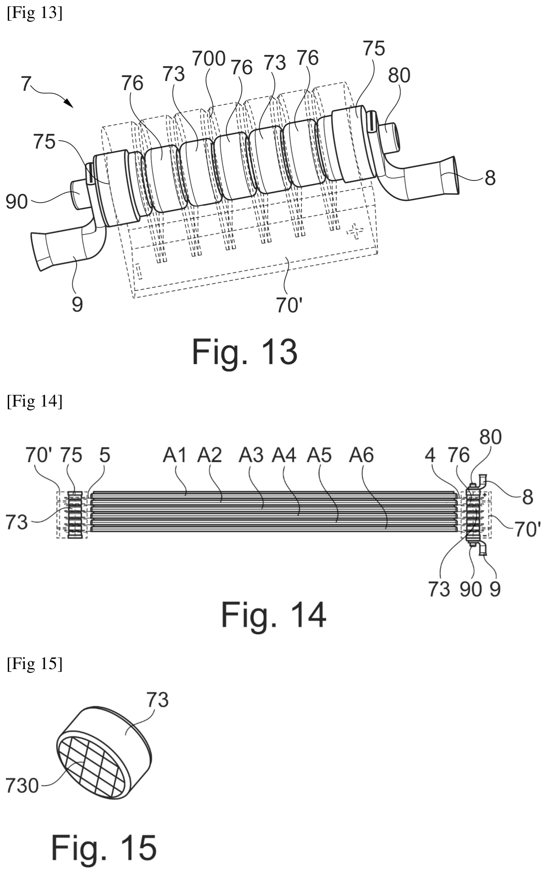

Les figures 13 et 14 ont trait à un mode avec des blocs de connexion électrique 7 qui permettent de réaliser une architecture électrique en série du module M.

Ici, des pastilles 76, électriquement isolantes sont intercalées en alternance avec les pastilles de connexion électrique 73 au sein du logement 71 du corps 70' diélectrique.

Dans ce mode, un des deux blocs 7 comprend deux vis de pression 75 taraudées, aux deux extrémités opposées de l'empilement, à l'intérieur de chacune desquelles est vissée une vis de fixation 80 ou 90 d'une cosse de sortie 8 ou 9 du module M, une étant d'une polarité positive tandis que l'autre est de polarité négative. Aucune sortie du courant n'est réalisée par l'autre des deux blocs 7.

La figure 15 illustre une variante avantageuse selon laquelle une pastille de connexion électrique 73 est moletée pour définir une surface texturée 730, afin d'augmenter sa rugosité, ce qui permet de diminuer la résistance de contact électrique. D'autres techniques de texturation de surface, telles que le polissage, peuvent être envisagées pour augmenter la rugosité des surfaces de contact des pastilles de connexion électrique 73.

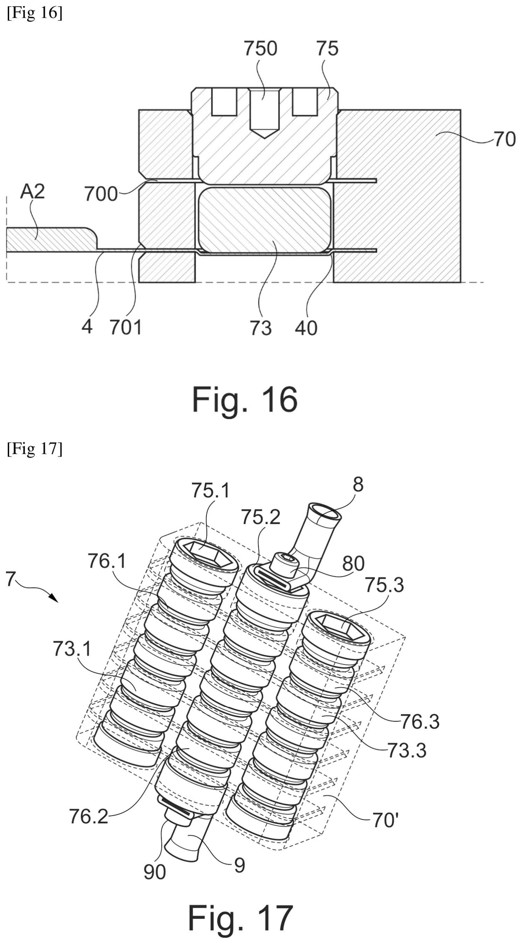

La figure 16 illustre une autre variante permettant de diminuer la résistance de contact électrique : la vis de pression 75 est vissée de sorte que les pastilles 73, 76 atteignent une course dans le logement 71 telle qu'elles créent un embouti 40 des languettes 4 ou 5.

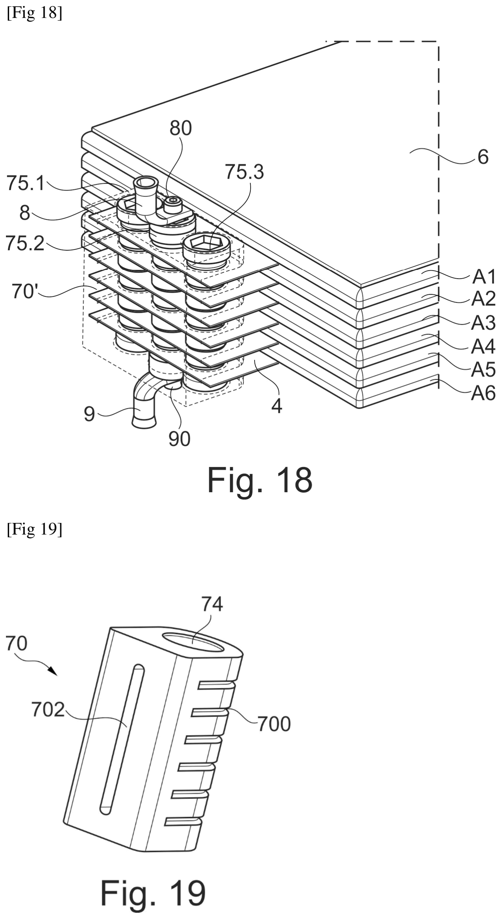

Les figures 17 et 18 illustrent une variante avantageuse selon laquelle un même corps 70' d'un bloc de connexion électrique 7 loge plusieurs rangées de pastilles 73, 76 côte-à-côte au sein de logements 71 parallèle. Ainsi, avec un bloc 7 intégrant plusieurs rangées de pastilles empilées 73, 76, une même languette de sortie 4 ou 5 est pincée par plusieurs pastilles 73 ou 76. Cela permet à la fois d'améliorer le maintien mécanique de l'ensemble du module M et d'augmenter les surfaces de contact électrique. L'augmentation de ces surfaces de contact électrique permet d'avoir une plus grande section de passage de courant. Si dans l'exemple illustré, le nombre de rangées de pastilles 73, 76 est égal à trois, on peut bien entendu en prévoir deux ou un nombre supérieur à trois.

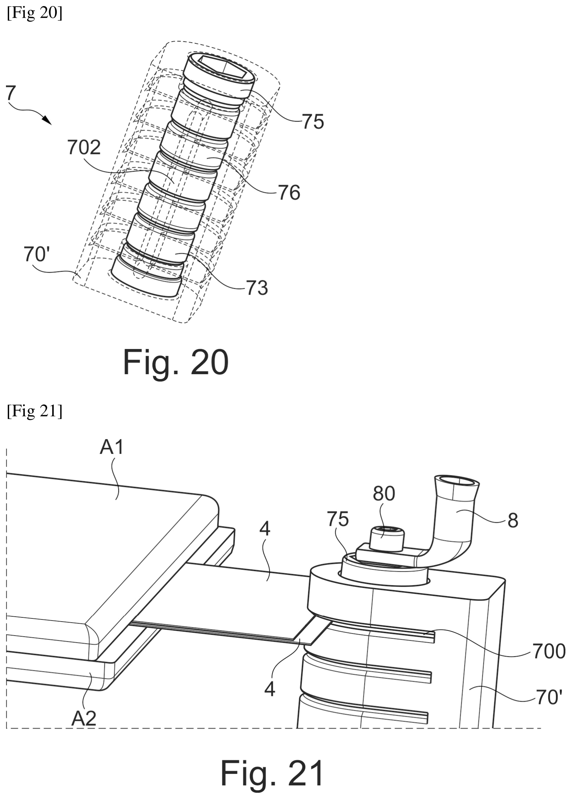

Les figures 19 et 20 montrent un corps 70' de bloc de connexion électrique 7 dans lequel est ménagée une lumière 702 de type trou oblong. Un opérateur peut ainsi visualiser à travers cette lumière 702 pour contrôler le bon empilement des pastilles 73, 76, selon l'architecture électrique souhaitée.

La figure 21 montre la possibilité d'insérer et pincer deux languettes 4 ou 5 d'accumulateurs adjacents A1, A2 au sein d'une seule et même fente 72 d'un corps 70' d'un bloc de connexion électrique.

Comme montré dans l'ensemble des exemples illustrés, un logement 71 d'un corps 70 est de préférence cylindrique est les pastilles de connexion électrique 73 et celles d'isolation électrique 76 sont de préférence pleines et cylindriques. Ces formes complémentaires permettent de garantir une translation simple, fluide et fiable à l'intérieur du logement 71.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Si dans l'ensemble des exemples illustrés, les emballages souples des accumulateurs conformes à l'invention sont de format prismatique, l'invention s'applique bien entendu à tous les accumulateurs à emballage souple à languettes formant les bornes de sortie ou pôles.

Un module de batterie M selon l'invention peut comprendre un nombre d'accumulateurs empilé, qui est déterminé en fonction de chaque application.

Également, si dans les exemples illustrés, toutes les languettes de sortie de polarité positive sont sur un même bord latéral des accumulateurs, et toutes celles de polarité négative sont sur le bord latéral opposé, l'invention peut être mise en œuvre pour d'autres configurations. En particulier, l'invention peut être mise en œuvre pour des accumulateurs à languettes de sortie positives ou négatives sur un même bord latéral ou longitudinal.

## Revendications

1. Module de batterie (M) comprenant :
- une pluralité d'accumulateurs allongés selon une direction longitudinale (X) et latérale (Y), en particulier de géométrie prismatique (A1, A2...AN+1), les accumulateurs étant empilés les uns sur les autres selon une direction d'empilement (Z) orthogonale aux directions (X,Y), chacun des accumulateurs comprenant au moins une cellule électrochimique C formée d'une cathode (2), d'une anode (3) et d'un électrolyte intercalé entre la cathode et l'anode, et un emballage (6) souple agencé pour contenir avec étanchéité la cellule électrochimique tout en étant traversé par une partie de deux languettes (4, 5), formant les pôles ou bornes qui s'étendent dans le plan de la cellule électrochimique;
- au moins un bloc de connexion électrique (7) comprenant :
• un corps (70, 70') de connexion électrique s'étendant selon la direction d'empilement (Z) et comprenant un logement (71) et une pluralité de fentes d'insertion (700) débouchant chacune sur le logement;
• une pluralité de pastilles de connexion électrique (73), électriquement conductrices, de préférence en aluminium ou en cuivre, empilées dans le logement du corps (70),
• au moins une vis de pression (75) vissée à une extrémité longitudinale du corps de sorte que les pastilles, empilées les unes sur les autres et mises en pression par la vis, pincent au moins une des deux languettes formant une borne de sortie ou pôle d'au moins une partie des accumulateurs, insérée dans une des fentes du corps, afin d'établir une ou des connexions électriques entre lesdits accumulateurs.

2. Module de batterie (M) selon la revendication 1, comprenant deux blocs de connexion électrique, dont l'un permet de pincer les languettes formant les bornes de sortie positives des accumulateurs et l'autre permet de pincer les languettes formant les bornes de sortie négatives des accumulateurs.

3. Module de batterie (M) selon l'une des revendications précédentes, les pastilles de connexion électrique étant empilées les unes sur les autres, les languettes formant une borne de sortie d'une même polarité des accumulateurs étant insérées individuellement entre deux pastilles de connexion électrique adjacentes avec le cas échéant une des languettes insérée entre la vis de pression et une pastille à une extrémité de l'empilement et/ou entre le corps et une pastille à l'autre extrémité de l'empilement, afin de réaliser une mise en parallèle électrique entre les accumulateurs.

4. Module de batterie (M) selon la revendication 3, comprenant deux blocs de connexion électrique, le corps de chacun des deux blocs étant électriquement conducteur, de préférence en aluminium ou en cuivre, et taraudé pour y visser une vis de fixation d'une cosse de sortie d'une polarité positive ou négative du module.

5. Module de batterie (M) selon la revendication 3, comprenant deux blocs de connexion électrique, le corps de chacun des deux blocs étant électriquement isolant, de préférence en polyétheréthercétone (PEEK) ou polyétherimide (PEI), chacun des deux blocs comprenant une vis de pression taraudée pour y visser une vis de fixation d'une cosse de sortie d'une polarité positive ou négative du module.

6. Module de batterie (M) selon l'une des revendications 1 ou 2, les pastilles de connexion électrique étant empilées les unes sur les autres en alternance avec des pastilles d'isolation électrique (76), électriquement isolantes, les languettes formant une borne de sortie d'une même polarité des accumulateurs étant insérées individuellement entre une pastille de connexion électrique et une pastille d'isolation électrique adjacente avec le cas échéant une des languettes insérée entre la vis de pression et une pastille de connexion ou d'isolation électrique à une extrémité de l'empilement, afin de réaliser une mise en série électrique entre les accumulateurs.

7. Module de batterie (M) selon la revendication 6, comprenant deux blocs de connexion électrique, le corps de chacun des deux blocs de connexion électrique étant électriquement isolant, de préférence en polyétheréthercétone (PEEK) ou polyétherimide (PEI), un des deux blocs comprenant deux vis de pression taraudées pour y visser une vis de fixation d'une cosse de sortie du module, une étant d'une polarité positive tandis que l'autre est de polarité négative.

8. Module de batterie (M) selon l'une des revendications précédentes, les pastilles de connexion et le cas échéant les pastilles d'isolation électrique étant pleines.

9. Module de batterie (M) selon l'une des revendications précédentes, les pastilles connexion et le cas échéant les pastilles d'isolation électrique étant sous la forme de cylindres, le logement étant sous la forme d'un cylindre creux.

10. Module de batterie (M) selon l'une des revendications précédentes, au moins une des faces planes principales des pastilles connexion ayant sa surface texturée et/ou ondulée, de sorte à augmenter sa rugosité.

11. Module de batterie (M) selon l'une des revendications précédentes, la vis de pression étant vissée de sorte que les pastilles créent un embouti des languettes.

12. Module de batterie (M) selon l'une des revendications précédentes, le corps du bloc de connexion électrique comprenant une pluralité de logements parallèles avec des fentes d'insertion alignées entre elles, chacun logeant des pastilles de connexion électrique.

13. Module de batterie (M) selon l'une des revendications précédentes, le corps du bloc de connexion électrique comprenant une fenêtre débouchante depuis l'extérieur sur le logement pour visualiser l'empilement des pastilles.

14. Module de batterie (M) selon l'une des revendications précédentes, au moins deux languettes formant chacune une borne de sortie ou pôle d'un de deux accumulateurs adjacents étant insérées et pincées dans une même fente.

15. Procédé de réalisation d'un module de batterie (M) selon l'une des revendications précédentes, comprenant les étapes suivantes :
i/ empilement selon la direction d'empilement (Z) les uns sur les autres de la pluralité d'accumulateurs avec les languettes (4, 5), formant les pôles ou bornes de sortie d'une polarité positive ou négative des accumulateurs qui sont en regard les unes des autres en étant distantes ;
ii/ empilement des pastilles de connexion électrique au sein du logement d'au moins un bloc de connexion électrique dans une position d'attente laissant dégager l'intérieur de la pluralité de fentes d'insertion;
iii/ insertion d'une des deux languettes formant une borne ou pôle de chaque accumulateur dans une d'insertion ;
iv/ vissage de la vis de pression du bloc de sorte à mettre en pression les pastilles empilées et par-là à pincer la languette afin d'établir une ou des connexions électriques entre lesdits accumulateurs.
